(19) Europäisches Patentamt / European Patent Office / Office européen des brevets

(11) **EP 2 577 226 B1**

(12) **FASCICULE DE BREVET EUROPEEN**

(45) Date de publication et mention
de la délivrance du brevet:
**21.02.2018 Bulletin 2018/08**

(21) Numéro de dépôt: **11728326.7**

(22) Date de dépôt: **30.05.2011**

(51) Int Cl.:
**G01B 15/02** *(2006.01)* **G01B 7/06** *(2006.01)*

(86) Numéro de dépôt international:
**PCT/FR2011/051232**

(87) Numéro de publication internationale:
**WO 2011/151585 (08.12.2011 Gazette 2011/49)**

(54) **PROCÉDÉ ET DISPOSITIF DE MESURE EN CONTINU DE L'ÉPAISSEUR D'UNE COUCHE DE MATERIAU DE REVÊTEMENT SUR UNE BANDE EN DÉFILEMENT.**

VERFAHREN UND VORRICHTUNG ZUM KONTINUIERLICHEN MESSEN DER DICKE EINER BESCHICHTUNG AUF EINEM LAUFSTREIFEN

PROCESS AND DEVICE FOR CONTINUOUSLY MEASURING THE THICKNESS OF A COATING LAYER ON A RUNNING STRIP.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.05.2010 PCT/FR2010/051046**

(43) Date de publication de la demande:
**10.04.2013 Bulletin 2013/15**

(73) Titulaire: **ArcelorMittal**
**1160 Luxembourg (LU)**

(72) Inventeur: **GAUJE, Pierre**
**F-57920 Klang (FR)**

(74) Mandataire: **Lavoix**
**2, place d'Estienne d'Orves**
**75441 Paris Cedex 09 (FR)**

(56) Documents cités:
**AU-B2- 582 340       US-A- 5 394 085**
**US-A- 5 800 615       US-A1- 2003 067 298**
**US-A1- 2009 112 509   US-B1- 6 366 083**

**Description**

La présente invention est relative à la mesure de l'épaisseur d'une couche de matériau de revêtement d'une bande en défilement telle qu'une bande d'acier galvanisé.

Pour protéger les tôles d'acier contre la corrosion on les revêt d'un matériau tel que le zinc et on obtient ainsi des tôles galvanisées. Pour réaliser ce revêtement de zinc on fait défiler des bandes dans un four de recuit puis à travers une cloche afin de les faire pénétrer dans un bain de zinc liquide pour qu'elles en ressortent enduites d'une couche de zinc qui est liquide et que l'on essore par soufflage d'un gaz tel que de l'azote. Après l'essorage, on soumet éventuellement les bandes à un traitement thermique de façon à provoquer une réaction entre la couche de zinc et le substrat en acier, puis on refroidit les tôles et enfin on les fait passer dans une installation de laminage superficiel telle que «skin pass» avant de les bobiner. Afin d'obtenir des tôles qui aient une surface bien régulière pour, qu'après mise en peinture, elles présentent un aspect de surface excellent, il est nécessaire que la couche de revêtement de zinc ou d'alliage de zinc soit la plus régulière possible. En outre, pour pouvoir garantir une bonne protection contre la corrosion, il est nécessaire que la couche de revêtement soit d'épaisseur suffisante en tout point de la bande. Pour obtenir ce résultat de façon fiable sur des installations industrielles, il faut pouvoir à la fois piloter le processus et contrôler le résultat et donc mesurer l'épaisseur de la couche de zinc. Pour effectuer cette mesure d'épaisseur on utilise en général des procédés par fluorescence X qui permettent de faire une mesure absolue de l'épaisseur de la couche de zinc mais qui ont l'inconvénient d'être relativement lents. Du fait de sa lenteur, ce processus ne permet pas de réaliser une cartographie dense de la surface de la bande et donc ne permet pas de faire un contrôle qualité rigoureux. Pour la même raison, il ne permet de détecter que des irrégularités de fonctionnement de processus dont les vitesses de variations sont faibles. De ce fait, la mesure d'épaisseur de revêtement par fluorescence X ne permet pas de faire un pilotage suffisamment rigoureux de la ligne de revêtement pour obtenir une garantie de qualité des produits qui est nécessaire pour répondre aux besoins du marché.

Afin de permettre de réguler l'épaisseur d'une couche de revêtement conductrice sur un substrat ferreux, il a été proposé d'utiliser une mesure à l'aide d'un capteur à courant de Foucault avec une fréquence élevée d'environ 500 kHz. Mais cette méthode n'est pas suffisamment précise et n'est pas prévue pour réaliser une cartographie de l'épaisseur de revêtement d'une bande.

Le document US 2003/067298 A1 décrit un système de mesure d'épaisseur à la surface d'un wafer, le système comprenant un capteur à courants de Foucault ayant une bobine d'excitation pour recevoir un courant à haute fréquence.

US 5 394 085 A décrit des sondes roulantes en contact direct avec une bande, pour mesurer une épaisseur, la bande étant coincée entre un rouleau 4 et un support 6 de référence.

US 2009/112509 A1 décrit un système de mesure de rayon de courbure, plus particulièrement pour un système de mesure de débit non intrusif dans un tuyau.

AU 8700082 B2 divulgue un procédé de surveillance de l'épaisseur d'un revêtement conducteur sur un substrat ferreux en mouvement.

US 5 800 615 A décrit un dispositif et un procédé de dépôt d'un revêtement de poudre électrostatique sur un objet, comprenant un moyen de mesure de la couche de poudre.

US 6 366 083 B1 décrit une méthode de mesure d'un dépôt sur une barre de combustible nucléaire.

Le but de la présente invention est de remédier à cet inconvénient en proposant un moyen permettant de mesurer l'épaisseur de la couche de revêtement sur une bande en défilement qui soit suffisamment rapide et précise pour pouvoir faire une cartographie dense de l'épaisseur des couches de revêtement sur la bande et pour permette de piloter de façon serrée la ligne de revêtement de façon à pouvoir réguler des irrégularités relativement rapides de fonctionnement du procédé.

A cet effet l'invention a pour objet un procédé de mesure d'épaisseur d'une couche de matériau de revêtement d'une bande en défilement selon la revendication 1.

Les revendications dépendantes 2 à 13 concernent des modes particuliers de réalisation.

L'invention concerne également un dispositif de mesure d'épaisseur d'une couche de matériau de revêtement d'une bande en défilement selon la revendication 14 ou 15.

L'invention concerne enfin une installation de revêtement selon la revendication 16 ou 17.

L'invention va maintenant être décrite de façon plus précise mais non limitative en regard des figures annexées dans lesquelles :

- la figure 1 représente de façon schématique une installation de revêtement au trempé d'une bande en défilement continu comportant notamment des moyens de mesure de l'épaisseur de la couche de revêtement.

- La figure 2 représente une vue de dessus schématique d'un moyen de mesure de l'épaisseur de la couche de revêtement d'une bande en défilement comprenant d'une part un moyen de mesure par fluorescence X et d'autre part un moyen de mesure par capteur à courants de Foucault.

- La figure 3 est une représentation schématique du principe de mesure de l'épaisseur de la couche de revêtement d'une bande en défilement permettant de reconstituer une cartographie dense de la répartition d'épaisseur de revêtement.
- La figure 4 est une vue de face d'un rouleau de guidage d'une bande en défilement équipée d'un moyen de mesure de l'épaisseur d'une couche de revêtement à l'aide de capteurs à courants de Foucault.
- La figure 5 est une vue de profil du dispositif de la figure 4.
- La figure 6 est une vue en coupe d'un capteur à courants de Foucault différentiel.
- La figure 7 est une vue schématique d'un dispositif de mesure d'épaisseur de couche de revêtement par courants de Foucault comprenant des moyens d'étalonnage.
- La figure 8 est une représentation schématique de dispositif de contrôle commande d'un dispositif de mesure de l'épaisseur de la couche de revêtement sur une bande en défilement dans une installation de revêtement en continu.

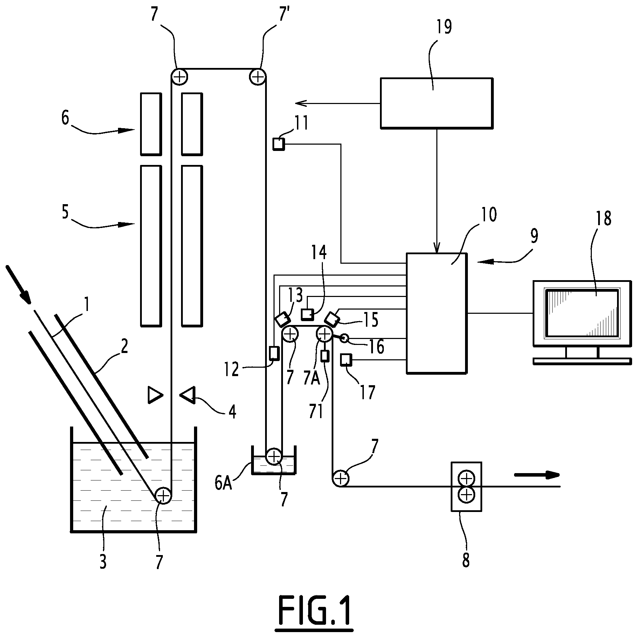

A la figure 1 on a représenté de façon schématique une installation de galvanisation par trempe en continu d'une bande 1 en défilement dans le sens de la flèche. Cette bande qui provient d'un four dans lequel elle a été recuite et portée à une température adaptée à la galvanisation et qui n'est pas représenté, traverse une cloche 2 qui lui permet de pénétrer dans un bain 3 de zinc ou d'alliage de zinc liquide. Après avoir été déviée par au moins un rouleau 7, la bande repart en remontant pour sortir du bain de galvanisation, passe entre des buses d'essorage 4 par soufflage de gaz, puis monte dans une tour de traitement et de refroidissement. Dans cette tour, la bande, après avoir éventuellement traversé un four d'alliation 5, passe entre des caissons de refroidissement par soufflage de gaz 6, puis descend en passant sur un rouleau 7', (appelé « top roll ») vers un bac de trempe à eau 6A et remonte dans une deuxième boucle comprenant un dispositif de centrage de bande 71, avant d'être évacuée à travers un laminoir superficiel de type « skin pass » 8 puis bobinée. Le dispositif de centrage de bande 71 comprend un rouleau de guidage latéral 7A. Cette ligne de revêtement au trempé, connue en elle-même de l'homme du métier, est équipée d'un moyen repéré généralement par un moyen 9 de mesure ou de contrôle de l'épaisseur de la couche de revêtement. Ce moyen 9 de contrôle de l'épaisseur de la couche de revêtement comprend un moyen de commande automatique 10 relié à un dispositif 11 de mesure d'épaisseur par fluorescence X, à un dispositif 12 de détection de la soudure de deux bandes successives, à un dispositif 13 de détection d'un défaut de géométrie sur la bande, à un dispositif 14 de démagnétisation de la bande, à un dispositif 15 de mesure d'une grandeur représentative de l'épaisseur de la couche de revêtement à l'aide de capteurs à courants de Foucault. Les capteurs à courant de Foucault du dispositif de mesure 15 sont disposés en regard du rouleau de guidage latéral 7A qui entraîne un générateur d'impulsions 16 lui-même relié au moyen de commande automatique 10. Enfin le moyen de commande automatique 10 est relié à un dispositif 17 de détection de la position latérale de la bande. Le dispositif de commande automatique 10 est également relié d'une part à un moyen 18 d'affichage des résultats qui est par exemple un écran et d'autre part à un ordinateur de gestion du procédé de revêtement 19.

Le moyen 11 de mesure d'épaisseur de la couche de revêtement par fluorescence X est un moyen connu en lui-même qui comporte une jauge de mesure par fluorescence X montée mobile transversalement par rapport à la bande sensiblement parallèlement à la surface de celle-ci. Cette jauge permet de faire en continu une mesure précise de l'épaisseur de la couche de revêtement. Cependant, comme elle est assez lente, elle ne permet de mesurer des épaisseurs que sur des plages n'assurant pas une couverture dense de la surface de la bande.

Le dispositif 12 de détection de soudures de jonction de bandes successives est un dispositif connu en lui-même utilisé sur les installations de revêtement en continu et qui permet de détecter le changement de bande. En effet, sur ces installations de revêtement en continu, on effectue le revêtement de bandes successives raccordées entre elles par soudure. Ces bandes, issues de bobines différentes, peuvent être de nature différente. La détection de la soudure permet de détecter le passage d'un changement de bande et de suivre l'évolution du passage des bandes dans l'installation.

Le dispositif de démagnétisation 14 est un dispositif connu en lui-même qui engendre un champ magnétique longitudinal alternatif de 50 Hz par exemple qui, combiné avec le mouvement de la bande, démagnétise celle-ci. Ce dispositif n'est nécessaire que lorsque l'installation de galvanisation comporte des moyens de stabilisation de la bande par effet magnétique. En effet ces dispositifs de stabilisation magnétique de la bande engendrent une aimantation permanente de celle-ci qui peut perturber des mesures faites par des procédés par courants de Foucault. Lorsque l'installation de revêtement ne dispose pas de moyen de stabilisation magnétique, l'installation de mesure d'épaisseur ne comporte pas de dispositif de démagnétisation.

Le dispositif 13 de détection de défaut géométrique de la bande est constitué par exemple d'un ou deux lasers qui émettent des rayons lumineux parallèles à la surface de la bande au niveau d'un rouleau 7, tel que celui suivant la sortie de la bande du bac de trempe à eau, le ou les rayons laser venant éclairer des cellules photoélectriques. Lorsque la bande qui circule dans l'installation est bien plane, celle-ci passe sous les faisceaux lasers qui éclairent normalement les cellules photoélectriques. Lorsque la bande présente un défaut géométrique trop important, celui-ci vient intercepter un rayon lumineux issu d'un laser. Lorsque le rayon est intercepté, il n'éclaire plus la cellule photoélectrique, ce qui permet d'engendrer un signal de détection d'un défaut de géométrie de la bande. Un tel signal peut être utilisé pour déclencher la mise en sécurité de certains équipements.

Le dispositif 15 de mesure à l'aide de capteurs à courants de Foucault, qui sera décrit plus en détail ultérieurement est constitué d'au moins une poutre sur laquelle est disposée une pluralité de capteurs à courants de Foucault alignés selon au moins une ligne parallèle à la surface de la bande et s'étendant latéralement par rapport à la bande. En service, ces capteurs sont disposés en regard d'au moins une génératrice d'un rouleau de guidage latéral de la bande 7A qui entraîne un générateur d'impulsions 16. Ce générateur d'impulsions 16 entraîné par le rouleau de guidage 7A permet de suivre l'avancement de la bande de façon connue en elle-même par l'homme du métier.

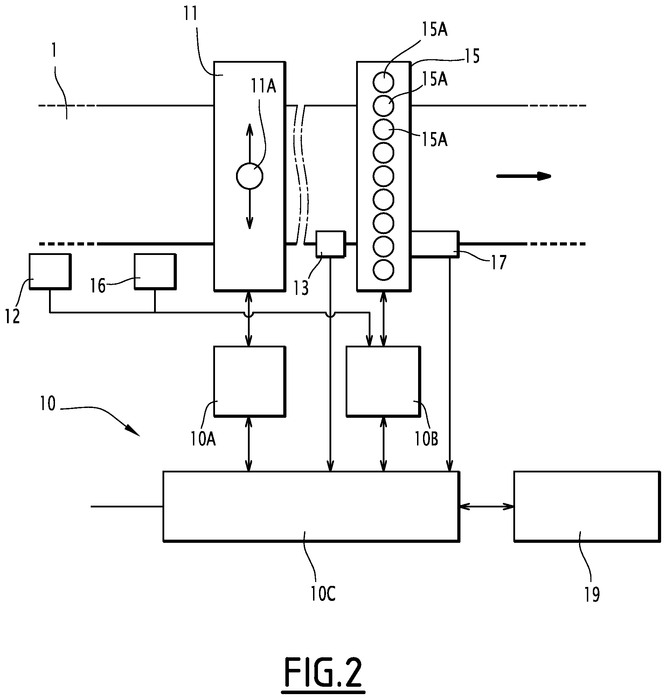

A la figure 2 on a représenté en vue de dessus et de façon schématique les moyens de mesure de l'épaisseur constitués par la jauge à rayon X et par le dispositif de mesure par courants de Foucault.

La jauge 11 à fluorescence X comporte une tête de mesure 11A entraînée transversalement par rapport au sens de défilement de la bande 1 par un mécanisme connu en lui-même de l'homme du métier et constitué d'un bâti et de moyens d'entraînement. Cette tête de mesure est reliée à un moyen de commande 10A de la jauge à fluorescence X qui reçoit des informations relatives à la position de la tête de mesure 11A et au résultat des mesures effectuées. Ce moyen de commande de la jauge à fluorescence X 10A est relié à l'ordinateur de commande 10C du dispositif de mesure de l'épaisseur du revêtement sur la bande.

Le dispositif de mesure à l'aide de capteurs à courants de Foucault 15 est ici constitué d'une poutre sur laquelle sont disposés selon une ligne transversale par rapport au sens de défilement de la bande une pluralité de capteurs à courants de Foucault 15A de petite dimension. Ces capteurs sont reliés à un moyen de commande 10B des capteurs à courants de Foucault qui reçoit également des informations provenant du moyen 12 de détection de soudure et du générateur d'impulsion 16 permettant de suivre l'avancement de la bande et qui peut envoyer des informations des résultats de mesures à l'ordinateur de commande 10C du dispositif de mesure de l'épaisseur de la couche de revêtement. Cet ordinateur de commande 10C du moyen de mesure de l'épaisseur de la couche de revêtement est relié à des moyens 17 de détection de la position latérale de la bande par rapport au dispositif de mesure. L'ordinateur 10C est relié à l'ordinateur 19 de conduite du procédé de l'installation de revêtement. L'ensemble des moyens 10A, 10B et 10C constituent le moyen de commande automatique 10.

Le nombre de capteurs à courants de Foucault est adapté en fonction de leur diamètre et de la largeur de la ligne de revêtement pour pouvoir mesurer l'épaisseur de la couche de revêtement sur toute la largeur des bandes revêtues. A titre d'exemple, pour une ligne de 1,50 m de large, le nombre de capteur peut être de 16, ce qui permet de faire des mesures tous les 100 mm.

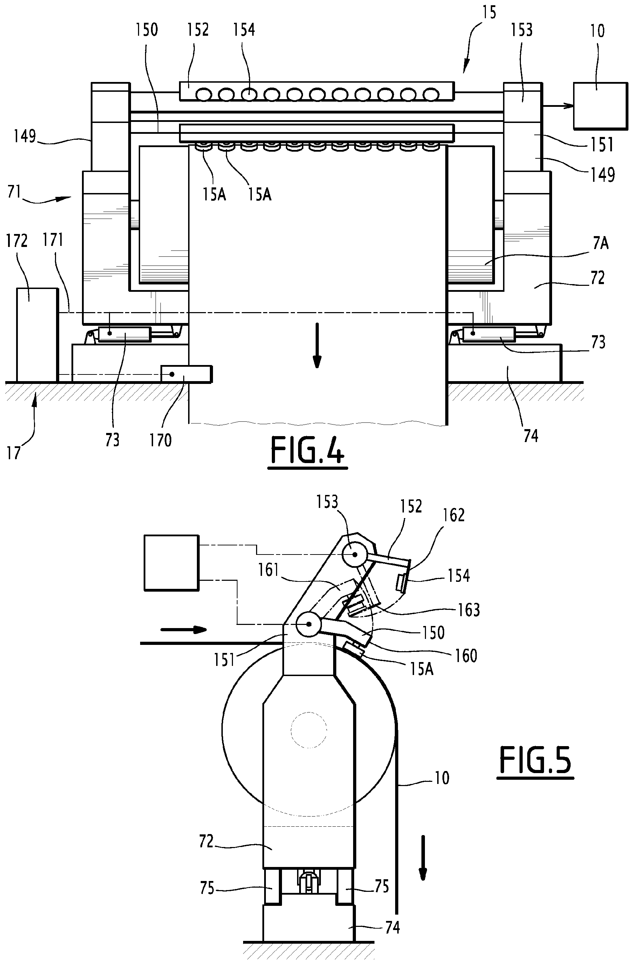

Le dispositif 15 de mesure d'épaisseur à l'aide de sondes à courants de Foucault, est représenté plus en détail aux figures 4 et 5. Ce dispositif qui est disposé en regard d'une génératrice d'un rouleau 7A d'un dispositif de guidage latéral 71, est constitué d'une poutre 150 sur laquelle sont disposés les capteurs à courants de Foucault 15A. Cette poutre est entraînée en rotation par un moteur 151 qui est par exemple un moteur hydraulique ou pneumatique. La rotation de la poutre permet de déplacer les capteurs à courant de Foucault entre une position de service 160 et une position effacée 161.

Dans la position de service, les capteurs sont à proximité de la surface de la bande 1 en cours de défilement, cette distance est de l'ordre d'une dizaine de millimètres mais peut être comprise entre par exemple 1 et 20 millimètres. Dans la position effacée, les capteurs sont relevés et bien écartés de la bande ce qui permet soit de manipuler la bande sans difficulté soit de laisser passer des défauts de géométrie de la bande.

Le dispositif de mesure par capteurs à courants de Foucault 15 comporte également une deuxième poutre 152 entraînée également en rotation par un moteur 153 hydraulique ou pneumatique par exemple. Cette poutre 152 porte une pluralité de rondelles «étalons» 154, aussi nombreuses que les sondes à courants de Foucault portées par la poutre 150 et disposés de façon à pouvoir être mis en regard des capteurs à courants de Foucault lorsqu'ils sont en position effacée. Les poutres 150 et 152 ainsi que leurs moteurs d'entraînement sont montées par l'intermédiaire de châssis 149 sur le berceau 72 qui supporte le rouleau 7A du dispositif de guidage latéral de la bande 71. Ce berceau 72 repose par l'intermédiaire de glissières 75 sur un châssis 74 qui repose sur le sol. Le berceau 72 est entraîné latéralement par des vérins 73 pilotés par un moyen connu en lui-même de pilotage du centrage de la bande. En effet le centrage latéral de la bande sur la ligne est réalisé en déplaçant latéralement le rouleau 7A porté par son berceau 72. La position des vérins 73 est enregistrée par des moyens de mesure connus en eux-mêmes tels que par exemple des capteurs à fils, inductifs ou d'autres capteurs qui sont reliés à un moyen de commande et de mesure 172. Des détecteurs 170 de position de la bande par rapport au sol qui sont par exemple des moyens du type à courants de Foucault permettant de détecter le bon centrage ou le décentrage de la bande, sont reliés également aux moyens de commande et de mesure 172. La poutre 150 portant les capteurs à courants de Foucault 15A étant mécaniquement liée au berceau 72 qui supporte le rouleau 7A, la position du berceau par rapport au sol étant mesurée à l'aide du dispositif de mesure associé au vérin 73, le centrage de la bande étant mesuré à l'aide du dispositif 170 et la largeur de la bande étant connue, on peut déterminer la position de la bande par rapport aux capteurs à courants de Foucault 15A. De ce fait, comme on connaît la position de chaque capteur à courants de Foucault avec lequel on fait des mesures, on connaît la position exacte de chaque mesure par rapport à la largeur de la bande.

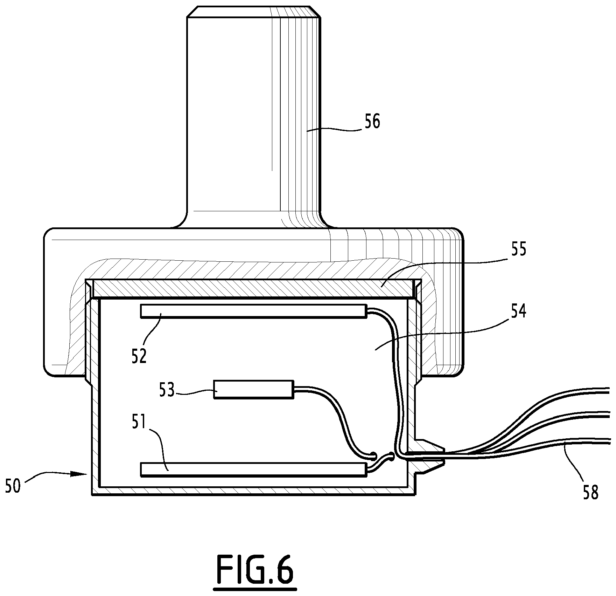

Les capteurs à courants de Foucault sont des capteurs différentiels bi-fréquence qu'on a représentés agrandis en coupe à la figure 6.

Ils comportent une tête de mesure 50 qui comporte une première bobine 51 destinée à être mise en regard de la bande à mesurer, une deuxième bobine 52 identique à la première et disposée à l'opposé de la première bobine toutes les deux contenues dans un bloc 54 constitué d'une résine conductrice de la chaleur qui contient également une sonde de température 53. La deuxième bobine 52 est en regard d'un échantillon de référence 55 constitué d'une pastille d'acier comportant une couche revêtue de zinc. Cet ensemble est maintenu par une culasse 56 dans lequel la tête de mesure est vissée.

Ce capteur différentiel a l'avantage d'être très peu sensible aux variations de température du fait de la résine conductrice de chaleur qui permet d'égaliser les températures des deux bobines. Cette sonde étant insensible à la température, il n'est pas nécessaire de prévoir des moyens de compensation tels que des thermistances ni de réaliser des bobinages dans des alliages spéciaux peu sensibles à la chaleur mais qui ont l'inconvénient d'avoir des propriétés électriques pas toujours satisfaisantes.

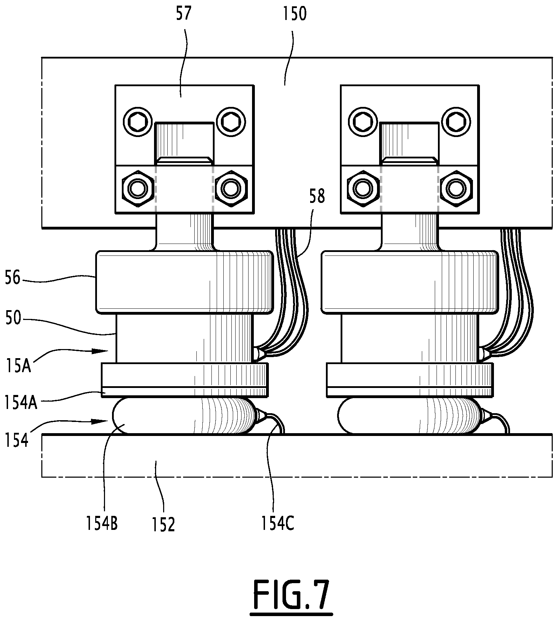

A la figure 7, on a représenté de face une portion de poutre 150 portant des capteurs à courants de Foucault 15A mis au contact des moyens d'étalonnage 154 portés par la poutre 152. Chaque capteur 15A à courants de Foucault comporte comme indiqué précédemment une tête de mesure 50 portée par une culasse 56 maintenue sur la poutre 150 par des moyens de maintien 57 que l'homme du métier peut concevoir sans difficultés. Ces capteurs 50 sont reliés par des câbles 58 au boîtier de commande et de mesure des capteurs. Le moyen d'étalonnage 154 porté par la poutre 152 comprend une rondelle 154A découpée dans une tôle revêtue du type de celle que l'on veut mesurer. Cette rondelle 154A est identique à l'échantillon de référence 55 disposé à l'intérieur des capteurs à courants de Foucault. La rondelle 154A est collée sur une cale en matière plastique dont l'épaisseur est égale à la distance entre la surface de la bande et un capteur en position de mesure. La rondelle collée sur la cale constitue un échantillon d'étalonnage qui est porté par un vérin pneumatique 154B qui permet de la plaquer contre la surface des capteurs à courant de Foucault. Les rondelles d'étalonnage 154A permettent de faire un réglage des capteurs. En effet, lorsqu'une rondelle d'étalonnage est contre le capteur, les rondelles vues par les deux bobines 51 et 52 du capteur étant identiques, il est possible d'ajuster les réglages du dispositif pour que le signal délivré par le capteur corresponde à l'identité des deux rondelles.

Dans le mode de réalisation représenté, le dispositif de mesure ne comporte qu'une ligne de capteurs à courants de Foucault. Mais, afin d'augmenter la densité des mesures, dans le sens transversal, le dispositif peut comprendre plusieurs lignes de capteurs parallèles entre elles, les capteurs d'une ligne étant décalés latéralement par rapport aux capteurs d'une autre ligne pour que les capteurs d'une ligne soient disposés en regard de l'intervalle entre deux capteurs de l'autre ligne.

Dans le mode de réalisation décrit, le dispositif de mesure est disposé après le bac de trempe. Mais d'autres dispositions sont possibles. En particulier le dispositif peut être disposé au sommet de la tour de traitement et de refroidissement, en regard du rouleau dit « top roll » par exemple. Cette disposition a l'avantage de conduire à une détection d'éventuelles dérives du procédé plus rapides que dans la disposition représentée. Mais elle présente l'inconvénient que la température de la bande est encore assez élevée (150 à 200°C), ce qui nécessite des compensations de température plus importantes.

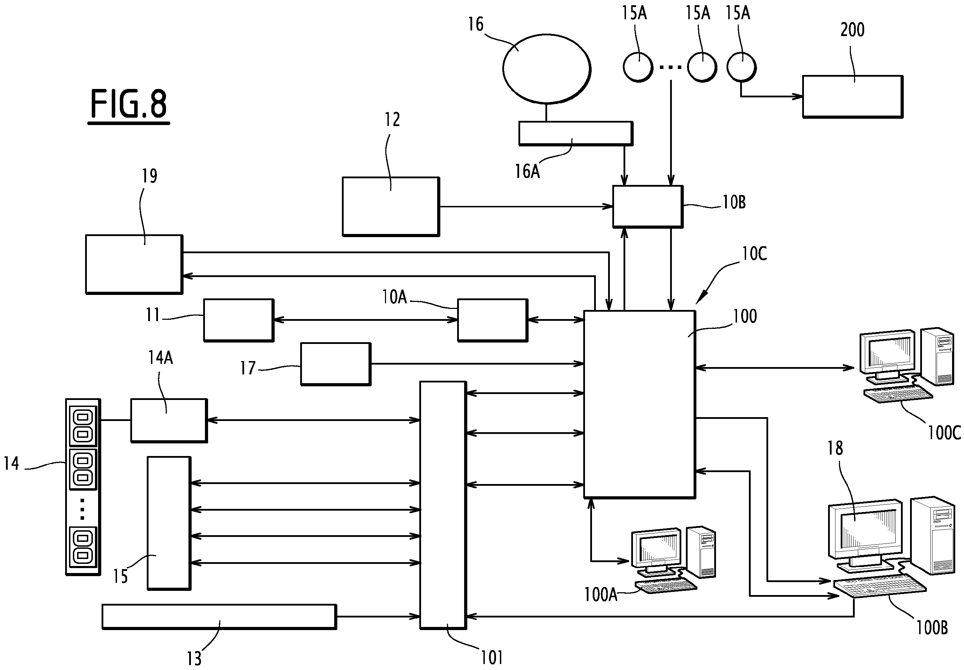

A la figure 8 on a représenté de façon schématique l'architecture du système de commande automatique de l'installation de mesure de l'épaisseur utilisant des capteurs à courants de Foucault destinée à être implantée sur une ligne de revêtement en continu. Sur ce schéma, les capteurs à courants de Foucault sont repérés 15A et peuvent envoyer un signal de mesure de température à un enregistreur de température 200. Les capteurs à courants de Foucault 15A sont reliés à un boîtier de commande et de mesure de courants de Foucault 10B qui comporte toute l'électronique nécessaire à l'exécution des mesures par courants de Foucault qui est connue en elle-même. Le boîtier est également relié au générateur d'impulsion 16 entraîné par le rouleau de guidage latéral de la bande. Les impulsions du générateur d'impulsion 16 sont mises en forme par un moyen de mise en forme électronique 16A connu en lui-même de l'homme du métier. Le boîtier de commande électronique des capteurs à courants de Foucault 10B est également relié au détecteur 12 de soudure de la bande qui permet de détecter le début d'une bande et ainsi de repérer les positionnements des mesures faites sur la bande. Les moyens de commande électronique 10B des capteurs à courants de Foucault sont reliés à un ordinateur 100 qui est lui-même relié d'une part à l'ordinateur 19 de commande du processus de l'installation de revêtement afin, d'une part, de pouvoir recevoir des informations sur la largeur, la longueur et l'épaisseur de la bande, l'épaisseur de revêtement visée et la nature de l'acier dont est constituée la bande, et d'autre part, de pouvoir envoyer à cet ordinateur les résultats des mesures d'épaisseur pour le stocker sous forme d'une cartographie de l'épaisseur du revêtement. L'ordinateur 100 de conduite du procédé de mesure d'épaisseur est également relié à un automate 101 lui-même relié au dispositif mécanique de mesure par capteurs à courants de Foucault 15 de façon à pouvoir piloter cette installation c'est-à-dire commander la mise en position des capteurs pour pouvoir faire des mesures, déclencher la mise rapide en position effacée des capteurs lorsqu'un défaut d'épaisseur géométrique de la bande est détecté par le moyen de détection 13 relié à l'automate 101, commander la mise en position des échantillons d'équilibrage et notamment le gonflage des vérins hydrauliques de façon à pouvoir effectuer l'équilibrage des capteurs. L'automate 101 est également relié au moyen 14 de démagnétisation par l'intermédiaire d'un boîtier électronique de mise en forme 14A.

Par ailleurs, l'ordinateur 100 est relié à une pluralité de terminaux 100A, 100B et 100C qui permettent de le commander ou de transmettre des informations propres au fonctionnement de l'ordinateur ou d'afficher des résultats de mesure. En particulier, le moyen d'affichage 18 qui fait partie du terminal 100B, permet d'afficher la cartographie de l'épaisseur mesurée sur la bande. Ce terminal 100B est par exemple installé dans la cabine de commande de l'installation de revêtement.

D'une façon générale l'homme du métier sait concevoir et implanter des architectures de dispositifs de commande automatique d'installations de ce type.

On va maintenant décrire les principes de la mesure de l'épaisseur de la couche de revêtement d'une bande revêtue à l'aide du dispositif qui vient d'être décrit, puis on décrira son utilisation sur une installation de revêtement au trempé.

Comme on l'a indiqué précédemment les mesures par fluorescence X ont l'avantage d'être des mesures précises de l'épaisseur de la couche de revêtement mais ont l'inconvénient de se faire relativement lentement. En effet la mesure se fait au moyen d'une tête de mesure qui se déplace latéralement par rapport au sens de défilement de la bande pour couvrir toute la largeur de la bande. De ce fait, pour obtenir un profil complet d'épaisseur de revêtement en largeur de la bande, il est nécessaire que la tête de mesure ait parcouru toute la largeur de la bande. Compte tenu des vitesses de défilement des bandes dans les installations de revêtement de ce type qui vont de 30 mètres/minute à 150 mètres/minute environ et compte tenu de la vitesse à laquelle la tête de mesure par fluorescence X peut se déplacer, on obtient en général un profil complet de largeur de bande environ tous les 50 mètres de bande seulement. Bien évidemment ces profils sont mesurés selon des lignes en biais par rapport à l'axe de la bande et formant un angle faible avec cet axe.

Le moyen de mesure à l'aide de capteurs à courants de Foucault permet d'obtenir des grandeurs représentatives de l'épaisseur de la couche de revêtement qui ne sont que des mesures relatives, c'est-à-dire qui ont besoin d'être calibrées. En revanche, le dispositif a l'avantage de permettre de faire des mesures en des temps très courts.

Pour effectuer une mesure d'épaisseur d'une couche de revêtement à l'aide d'un capteur à courant de Foucault, il est connu de faire une mesure d'impédance complexe pour une fréquence d'excitation d'environ 500 kHz choisie pour que l'épaisseur de peau soit légèrement supérieure à l'épaisseur de la couche de revêtement. Mais avec une telle méthode, la mesure est très sensible à l'épaisseur de la couche à mesurer et aux variations de distance entre le capteur et la couche à mesurer, lorsque cette distance est faible. Elle est moins sensible à l'épaisseur de la couche à mesurer et aux variations de distance entre le capteur et la couche à mesurer, lorsque cette distance est plus importante. De ce fait, le mesure est toujours insuffisamment précise soit parce que trop sensible aux variations de distance entre le capteur et la couche à mesurer, soit parce que pas assez sensible aux variations d'épaisseur de la couche à mesurer.

Pour remédier à cet inconvénient, les inventeurs ont constaté de façon nouvelle qu'on pouvait s'affranchir des variations de distance entre le capteur et la couche à mesurer en utilisant deux mesures, l'une faite à une fréquence élevée telle que l'épaisseur de l'effet de peau soit légèrement supérieure à l'épaisseur de la couche de revêtement à mesurer et sensiblement inférieure à l'épaisseur de la bande d'acier revêtue, et l'autre, faite à une fréquence basse choisie pour que l'épaisseur de l'effet de peau soit voisine de l'épaisseur de la bande d'acier revêtue. Il est préférable que cette épaisseur de l'effet de peau reste inférieure à l'épaisseur de la bande, de façon à ne pas trop interférer avec les rouleaux d'appui de la bande lorsque les capteurs sont placés au droit d'un de ces rouleaux. Pour des bandes minces en acier d'épaisseur comprise entre 0,4 mm et 1,5 mm, revêtues de couches de zinc d'épaisseur comprise entre 5 $\mu$m et 70 $\mu$m ce qui correspond à des poids de zinc par m$^2$ appelé aussi « charge » de la couche de zinc compris entre 35 g/m$^2$ et 500 g/m$^2$, la fréquence élevée est comprise entre 400 kHz et 1000 kHz et de préférence comprise entre 500 kHz et 900 kHz, et, par exemple, égale à 750 kHz environ; la fréquence basse est comprise entre 40 kHz et 150 kHz, de préférence entre 50 kHz et 100 kHz et, par exemple, égale à 60 kHz environ.

Pour chacune des fréquences élevée et basse, on mesure de façon connue les parties imaginaires $I_e$ et $I_b$ respectivement et les parties réelles $R_e$ et $R_b$ respectivement des impédances complexes du capteur en présence de la bande à mesurer.

Selon l'invention, on calcule alors le module M d'une impédance complexe compensée à partir des impédances aux fréquences élevée et basse :

$$M = \left[ (R_b - aR_e + bI_e)^2 + (I_b - aI_e - bR_e)^2 \right]^{1/2}$$

Puis, on calcule l'épaisseur de zinc mesurée :

$$Ep_{zinc} = m_2 \times M^2 + m_1 \times M + m_0$$

Les coefficients $m_2$, $m_1$ et $m_0$ sont des coefficients d'étalonnage dépendant de la nature du revêtement et de celle du substrat (acier dont est constitué la bande). Ils sont déterminés par des essais préalables que sait faire l'homme du métier.

Les coefficients a et b dépendent de l'épaisseur de la couche de revêtement $Ep_{zinc}$, selon les formules suivantes :

$$a = a_1 \times Epz + a_0$$

$$b = b_2 \times Epz^2 + b_1 \times Epz + b_0$$

Les coefficients $a_0$, $a_1$, $b_0$, $b_1$, $b_2$ sont des coefficients d'étalonnage déterminés à l'aide d'essais préalables que sait faire l'Homme du métier.

Les coefficients a et b dépendant de l'épaisseur de zinc, pour calculer l'épaisseur exacte de zinc on procède par itération. Pour cela, on fixe une épaisseur de zinc théorique Epzth correspondant par exemple à l'épaisseur attendue, et on calcule les coefficients a et b correspondant, puis une première épaisseur de zinc estimée Epze. A l'aide de cette estimation, on recalcule des coefficients a et b et une meilleure estimation de l'épaisseur de zinc.

Bien qu'il soit possible de faire des itérations supplémentaires, les inventeurs ont constaté qu'une seule itération était suffisante pour obtenir une précision suffisante.

La méthode vient d'être décrite pour le cas d'une mesure faite avec un capteur à courant de Foucault simple.

Lorsqu'on utilise un capteur différentiel, pour chacune des fréquences d'excitation, on mesure l'impédance complexe de la bobine qui est en regard de la bande et de la bobine qui est en regard de l'étalon. Puis on fait la différence des composantes de ces deux impédances complexes ce qui donne deux grandeurs, l'une correspondant à la composante réelle, l'autre à la composante imaginaire. A partir de ces deux grandeurs, il est possible de calculer de façon connue en elle-même, une grandeur représentative de l'épaisseur de la couche de revêtement sur la bande pour laquelle on veut mesurer l'épaisseur de la couche de revêtement. Pour déterminer l'épaisseur exacte de la couche de revêtement il est alors nécessaire d'utiliser des valeurs d'étalonnage qui peuvent être d'une part un zéro Eo et d'autre part un gain G. Dans ce cas, si M est la grandeur déterminée à partir de la mesure fournie par les capteurs, l'épaisseur vraie de la couche de revêtement s'écrira : E = Eo + G x M. On peut également, et de préférence, adapter la méthode décrite ci-dessus pour l'exploitation d'une mesure faite avec un capteur à courant de Foucault simple. L'Homme du métier saura faire cette adaptation.

Dans tous les cas, les valeurs d'étalonnage peuvent être déterminés en utilisant des mesures faites à l'aide de capteurs à courants de Foucault et des mesures faites au même endroit à l'aide de moyens de mesure par fluorescence X ou par tout autre moyen permettant de faire une mesure absolue de l'épaisseur de la couche de revêtement. Ces valeurs d'étalonnage qui dépendent de différents paramètres et notamment de la nature de l'acier dont est constituée la bande, peuvent être enregistrées dans une table de correspondance entre les caractéristiques de la bande revêtue et les valeurs d'étalonnage. De ce fait quand on connaît les caractéristiques de la bande, on peut rechercher le ou les valeurs d'étalonnage adaptées et on peut déterminer ainsi l'épaisseur réelle de la couche de revêtement à partir de la mesure effectuée à l'aide des capteurs à courants de Foucault.

Les mesures d'impédances complexes ont l'avantage de permettre de générer un signal utile qui reste insensible aux variations de la distance entre le capteur et la bande mais qui reste sensible à l'épaisseur de zinc. Ainsi, avec le procédé selon l'invention, il est possible d'estimer l'épaisseur de la couche de zinc à $\pm$ 2 g /m² près et même à $\pm$1,8 g/m² près, en utilisant des capteurs disposés à une distance de la bande inférieure à 15 mm ou même 10 mm et par exemple de l'ordre de 8 mm. Ces mesures peuvent être faites pour des couches de revêtement allant au moins jusqu'à 400g/m² pour les deux faces. Elle peut être effectuée sur des couches d'épaisseur sensiblement plus importante.

Les capteurs à courants de Foucault ont l'avantage de permettre de faire des mesures très rapides puisque la mesure de l'impédance est faite en envoyant des impulsions très courtes de telle sorte que, pour un seul capteur, le temps nécessaire pour effectuer la mesure, la fréquence basse d'excitation et la fréquence élevée d'excitation est inférieur à une fraction de millisecondes.

Pour obtenir des mesures sur toute la largeur de la bande, on peut procéder en envoyant séquentiellement des commandes de mesure à chacun des capteurs de façon à saisir des mesures sur tous les capteurs s'étendant sur la largeur de la bande. Compte tenu des temps de mesure par capteur, en procédant ainsi il est possible de balayer toute la largeur de la bande en environ 2,5 millisecondes. De ce fait il est possible de faire des balayages de la bande toutes les 5 millisecondes par exemple ce qui permet pour une bande qui défile à la vitesse de 150 mètres/minute de faire des mesures sur toute la largeur tous les 12,5 millimètres de bande.

Cette commande séquentielle des capteurs à courants de Foucault à l'avantage d'éviter les interférences entre deux capteurs adjacents.

Pour effectuer les mesures sur les bandes, on peut effectuer un balayage complet de la série de capteurs en un temps tel que la fréquence de récurrence pour les 16 capteurs soit de 250Hz, par exemple. Pour obtenir les séries de mesures sur la bande réparties à distance constante selon la longueur, on prélève des mesures à une fréquence fonction de la vitesse de la bande. Par exemple lorsque la bande défile à 150 m/mn, la fréquence de prélèvement est de 200 Hz, mais elle n'est que de 20 Hz lorsque la bande défile à 15 m/mn. Dans les deux cas, la distance entre deux lignes de mesure est de 12,5 mm.

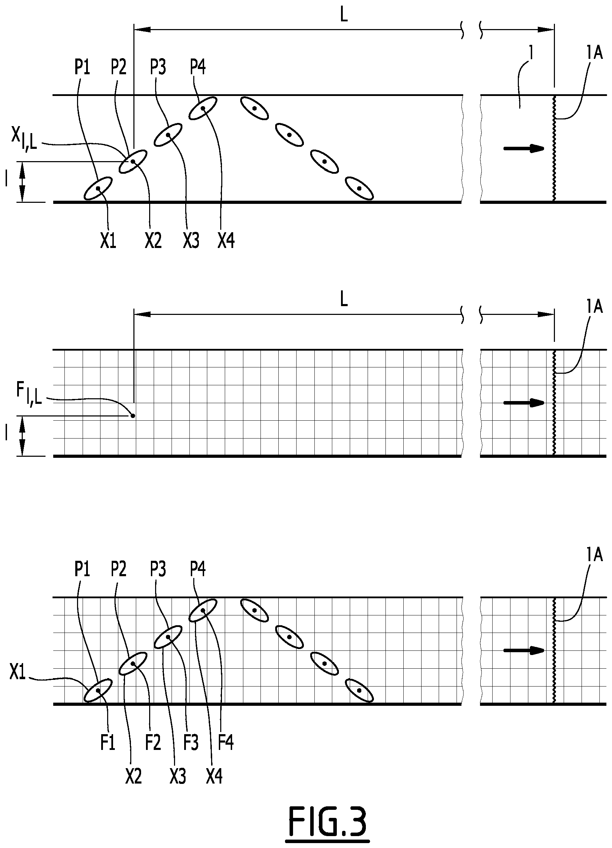

Compte tenu de ces différences de rapidité des mesures faites par courants de Foucault et des mesures faites par fluorescence X pour mesurer l'épaisseur de la couche de revêtement sur une bande, on procède comme indiqué à la figure 3 de façon schématique. Pour cela à l'aide de la sonde à fluorescence X et pour une pluralité de points repérés P1, P2, P3, P4, répartis sur la largeur et la longueur de la bande, on effectue des mesures d'épaisseur X1, X2, X3 et X4 dont on enregistre les positions selon la longueur de la bande par rapport à la soudure 1A, et les positions latérales par rapport à la largeur de la bande. Pour déterminer ces positions, on utilise le détecteur de soudure 12 et le générateur d'impulsion 16 entraîné par le rouleau de guidage de bande et les détecteurs de position de la bande et de la tête de mesure par rapport au sol.

L'homme du métier sait utiliser ces différents signaux de chacun des points de mesure.

Simultanément, à l'aide du dispositif à capteurs à courants de Foucault, on effectue des mesures en une pluralité de points $F_{I,L}$ disposés sur toute la surface de la bande et dont on enregistre les coordonnées L par rapport à la soudure 1A et I par rapport à la rive de la bande, ce qui permet d'obtenir une cartographie d'une grandeur représentative de l'épaisseur de la couche de revêtement de zinc.

On compare alors les épaisseurs X1, X2, X3, X4, mesurées à l'aide de la sonde à fluorescence X et les grandeurs F1, F2, F3, F4 mesurées à l'aide des capteurs à courants de Foucault pour des points correspondants P1, P2, P3, P4, comme indiqué sur la figure 3. A cette figure, on a représenté quatre points de mesure répartis sur la largeur. Il ne s'agit là que d'une représentation schématique et l'homme du métier comprendra qu'il peut y en avoir soit plus, soit moins, en fonction des besoins. A partir de ces mesures, on détermine des valeurs d'étalonnage qui sont alors utilisées pour pouvoir transformer les mesures de grandeurs représentatives de l'épaisseur faites par les sondes à courants de Foucault en des valeurs d'épaisseur réelle de couche de revêtement. On obtient ainsi une cartographie dense des mesures des épaisseurs de la couche de revêtement. Les méthodes de détermination des valeurs d'étalonnage à partir des mesures sont connues de l'homme du métier. On notera que dans certains cas, une seule valeur d'étalonnage, le zéro Eo peut être suffisante.

Cette cartographie dense des épaisseurs de la couche de revêtement peut être stockée et être utilisée pour faire du contrôle qualité fin mais elle peut aussi être utilisée pour détecter des anomalies dans le procédé de revêtement. Du fait de la densité des mesures faites à l'aide des courants de Foucault, il est possible de détecter des anomalies qui évoluent rapidement puisque, lorsque ces mesures par courants de Foucault sont faites tous les cinq millièmes de secondes, cela correspond à une fréquence d'échantillonnage de 200 Hz, ce qui permet de détecter des phénomènes rapides pour une ligne de revêtement en continu. Ces informations peuvent être soit affichées dans la cabine de commande de l'installation de revêtement, soit être renvoyées vers un ordinateur de conduite de procédé qui les exploite pour piloter l'installation de revêtement. Il est à noter que l'utilisation de ces mesures pour détecter en temps réel des anomalies du procédé de revêtement, ce qui permet d'y remédier, est d'autant plus efficace que la mesure est faite au plus près du bac de revêtement.

Comme on l'a indiqué précédemment, les valeurs d'étalonnage peuvent également être recherchées dans une table de correspondance. Cette façon de procéder a l'avantage de permettre, en comparant les mesures qui sont faites par sondes à fluorescence X et les mesures qui sont faites à l'aide de capteurs à courants de Foucault pour lesquelles on connaît des valeurs d'étalonnage, de vérifier le bon fonctionnement des sondes à fluorescence X. En effet il est fréquent que de telles sondes aient des problèmes de fonctionnement et en recoupant les mesures faites par les sondes à fluorescence X et les mesures faites avec les capteurs à courants Foucault, il est possible de détecter plus rapidement de telles anomalies.

La table de correspondance peut être constituée ou enrichie en utilisant des mesures effectuées sur des bobines de bandes de différentes caractéristiques notamment nuance d'acier, épaisseur de la bande, charge du revêtement.

Pour chacune de ces bandes, on enregistre la cartographie par courant de Foucault complète ainsi qu'une pluralité de mesures par fluorescence X permettant d'établir une pluralité de profils transversaux successifs dont on détermine la position selon la longueur de la bande. A titre d'exemple, on peut enregistrer ainsi entre 10 et 30 profils transversaux.

Parmi ces profils, on choisit une zone dite stable de plusieurs profils successifs, dans laquelle la somme des écarts entre les points correspondants de deux profils successifs est inférieure à un seuil fixé à l'avance. Cette zone contient, par exemple 6 ou 8 profils successifs. Bien évidemment, l'Homme du métier peut ajuster le nombre de profils transversaux enregistrés et le nombre de profils transversaux de la zone « stable » en fonction des circonstances particulières.

A partir de profils transversaux mesurés par fluorescence X dans la zone « stable », on détermine le profil transversal « fluorescence X » moyen dans cette zone.

A partir des mesures par courants de Foucault, on détermine un profil moyen « courants de Foucault » dans la zone « stable » définie pour le profil « fluorescence X » moyen.

Puis, en utilisant par exemple une méthode des moindres carrés, on détermine les coefficients E et G de la droite d'étalonnage et on les enregistre dans la table de correspondance en les associant à un paramètre d'identification du type de bande auquel il s'applique (notamment nuance d'acier, éventuellement, épaisseur de la bande).

Cette détermination des coefficients d'étalonnage est faite en différé. Aussi, elle peut être effectuée en utilisant des mesures faites sur plusieurs bandes constituées du même acier mais ayant des revêtements de charge (ou d'épaisseur) différentes.

Lors de la réalisation de la cartographie d'une bande particulière, on peut également faire une calibration dite « en temps réel ». Pour cela, au fur et à mesure qu'on enregistre les mesures par courants de Foucault, on calcule les épaisseurs (ou charge) du revêtement en utilisant les coefficients d'étalonnage adaptés enregistrés dans la table de correspondance.

On enregistre également les profils « fluorescences X » comme précédemment. On recherche des profils successifs valides, c'est-à-dire correspondant à des sommes d'écarts entre deux profils successifs inférieurs à un seuil. Dès que de tels profils sont détectés, on calcule la charge moyenne « fluorescence X » et on la compare à la charge moyenne « courant de Foucault » correspondante calculée à partir des valeurs obtenues comme indiqué ci-dessus.

Puis, on compare les deux charges moyennes et on ajuste le coefficient Eo (« zéro ») pour que la charge moyenne « courants de Foucault » soit égale à la charge moyenne « fluorescence X ».

Cette calibration « en temps réel » peut être réalisée sur toutes les bandes contrôlées.

Le procédé de mesure d'épaisseur d'une couche de revêtement sur une bande en défilement a été décrit pour la mesure de l'épaisseur d'une couche de revêtement par du zinc ou par un alliage de zinc sur une tôle d'acier. Il est particulièrement adapté à la mesure de couches de revêtement sur des bandes défilant dans des installations de revêtement à des vitesses comprises de préférence entre 5 m/mn et 200 m/mn. Mais, ce procédé et le dispositif pour sa mise en oeuvre peuvent être utilisés pour d'autres types de revêtement et, par exemple, pour des revêtements d'alliage d'aluminium sur des tôles d'acier, des revêtements d'étain sur des tôles d'acier ou plus généralement sur des bandes revêtues dont la couche de revêtement et le substrat sont susceptibles de réagir face à des capteurs à courants de Foucault. L'homme du métier saura déterminer quels sont les domaines d'application possibles pour de tels types d'installations.

Enfin, dans la description qui vient d'être faite, la ligne de revêtement ne comporte qu'un dispositif de mesure permettant de mesurer l'épaisseur de la couche de revêtement sur une seule face de la bande. Mais, on peut, sans difficultés, implanter deux dispositifs de mesure : un pour chaque face de la bande.

Enfin, on a décrit l'implantation du dispositif sur une ligne de revêtement, mais toute autre implantation peut être envisagée, sans toutefois sortir du cadre de l'invention telle que définie dans les revendications.

## Revendications

1. Procédé de mesure en continu de l'épaisseur d'une couche de matériau de revêtement sur une bande (1) en défilement selon lequel on mesure, à l'aide d'un capteur (15A) à courants de Foucault, pour au moins une zone de la bande (1), une grandeur représentative de l'épaisseur de la couche de revêtement et on détermine l'épaisseur de la couche de revêtement pour cette zone à partir de la grandeur mesurée et d'au moins une valeur d'étalonnage, tel que la mesure faite à l'aide du capteur (15A) à courants de Foucault comprend la mesure de l'impédance complexe d'une bobine (51) en regard de la bande (1) en défilement pour une fréquence basse d'excitation et une fréquence élevée d'excitation et l'élaboration d'une grandeur représentative de l'épaisseur de la couche de revêtement à partir desdites mesures d'impédance complexe, dans lequel la fréquence basse d'excitation est comprise entre 40 kHz et 150 kHz et dans lequel la fréquence élevée d'excitation est comprise entre 400 kHz et 1000 kHz.

2. Procédé selon la revendication 1, dans lequel l'on détermine l'au moins une valeur d'étalonnage en effectuant une mesure de l'épaisseur de ladite couche en au moins un point de la zone dans laquelle on a effectué une mesure à l'aide du capteur (15A) à courants de Foucault.

3. Procédé selon la revendication 1 ou 2, dans lequel l'on effectue ladite mesure d'épaisseur à l'aide d'une jauge d'épaisseur (11) à fluorescence X.

**4.** Procédé selon l'une quelconque des revendications 1 à 3, dans lequel la mesure faite à l'aide du capteur (15A) à courants de Foucault comprend en outre la mesure de l'impédance complexe, pour une fréquence basse d'excitation et une fréquence élevée d'excitation, d'une bobine (52) en regard d'un échantillon de référence (55) et dans lequel on détermine la grandeur représentative de l'épaisseur de la couche de revêtement à partir des différences entre les impédances complexes de la bobine (51) en regard de la bande (1) et de la bobine (52) en regard de l'échantillon de référence (55).

**5.** Procédé selon l'une quelconque des revendications 1 à 4, dans lequel la bande (1) est métallique.

**6.** Procédé selon la revendication 5, dans lequel la bande (1) métallique est en acier et le revêtement est un revêtement métallique constitué, par exemple, de zinc ou d'un alliage de zinc.

**7.** Procédé selon la revendication 5 ou 6, dans lequel, avant d'effectuer les mesures à l'aide de capteurs (15A) à courants de Foucault, on démagnétise la bande (1).

**8.** Procédé selon l'une quelconque des revendications 1 à 7, dans lequel, pour effectuer les mesures à l'aide de capteurs (15A) à courants de Foucault, on utilise une pluralité de capteurs (15A) à courants de Foucault disposés selon au moins une ligne sensiblement parallèle à la surface de la bande (1), s'étendant transversalement par rapport à la direction de défilement de la bande (1) et on excite séquentiellement les capteurs (15A) pour obtenir une série de mesures réparties sur la largeur de la bande (1).

**9.** Procédé selon la revendication 8, dans lequel on effectue une pluralité des dites séries de mesures réparties sur la largeur de la bande (1) en cadençant le déclenchement de chacune des dites séries de mesures à partir d'un signal de déplacement longitudinal de la bande (1) tel que, par exemple, un signal engendré par un générateur d'impulsion entraîné par un rouleau au contact de la bande (1).

**10.** Procédé selon la revendication 8 ou 9, dans lequel on détecte la position latérale de la bande (1) par rapport à l'au moins une ligne de capteurs (15A) à courants de Foucault et dans lequel on détermine la position de chaque zone de mesure par rapport à la largeur de la bande (1) à l'aide de la position latérale de la bande (1) par rapport à l'au moins une ligne de capteurs (15A) à courants de Foucault et de la position de chaque capteur (15A) dans la ligne de sondes.

**11.** Procédé selon la revendication 10, dans lequel l'on détecte un début de bande (1) tel que la soudure entre deux bandes successives, puis on détecte en continu le déplacement de la bande (1) et on détermine, pour chaque mesure, la longueur de bande (1) qui sépare le point de mesure et le début de bande (1), afin de déterminer les positions des zones de mesure par rapport à la longueur de la bande (1).

**12.** Procédé selon la revendication 11, dans lequel on enregistre les positions des zones de mesure par rapport à la longueur et à la largeur de la bande (1) pour élaborer une cartographie de l'épaisseur de revêtement sur la bande (1).

**13.** Procédé selon la revendication 12, dans lequel la bande (1) est en défilement dans une installation de revêtement en continu telle qu'une installation de galvanisation au trempé et dans lequel on affiche en temps réel au moins une partie de la cartographie dans une cabine de commande de l'installation de revêtement à l'aide d'un moyen de visualisation et/ou on transmet en temps réel au moins une partie de la cartographie à un dispositif automatique de pilotage de l'installation de revêtement pour que le dispositif de pilotage élabore une consigne de régulation pour l'installation de revêtement et/ou on enregistre la cartographie dans un moyen informatique à des fins de contrôle qualité.

**14.** Dispositif (9) de mesure en continu de l'épaisseur d'une couche de matériau de revêtement sur une bande (1) en défilement, comprenant :

- une pluralité de capteurs (15A) à courants de Foucault (15A) du type différentiel et bi- fréquence disposés en au moins une ligne sur une poutre support (150), chaque capteur (15A) comprenant une bobine (51) configurée pour être en regard de la bande (1),
- une jauge d'épaisseur (11) à fluorescence X,
- un dispositif de commande des capteurs (15A) à courants de Foucault (10B) relié à au moins un moyen de suivi de l'avancement de la bande (12, 16),
- un moyen de commande automatique (101) relié notamment à un moyen (17) de détection de la position latérale de la bande (1) par rapport à la pluralité de capteurs (15A) à courants de Foucault et à la jauge d'épaisseur (11) à fluorescence X, et

- un moyen informatique (100) de pilotage et de gestion des mesures relié au dispositif de commande des capteurs (15A) et au moyen de commande automatique (101) pour mettre en oeuvre un procédé selon l'une des revendications précédentes,

le dispositif (9) étant configuré pour mesurer l'impédance complexe de la bobine (51) pour une fréquence basse d'excitation et une fréquence élevée d'excitation et pour élaborer une grandeur représentative de l'épaisseur de la couche de revêtement à partir desdites mesures d'impédance complexe, la fréquence basse d'excitation étant comprise entre 40 kHz et 150 kHz, et la fréquence élevée d'excitation étant comprise entre 400 kHz et 1000 kHz.

**15.** Dispositif (9) selon la revendication 14, dans lequel la poutre (150) support des capteurs à courants de Foucault est montée mobile entre une position de service (160) et une position effacée (161), et dans lequel le dispositif comprend un moyen de déplacement de la poutre entre la position de service et la position effacée piloté par ledit moyen de commande automatique (101) qui est également relié à un moyen (13) de détection de défaut géométrique de la bande (1), et dans lequel le moyen de commande automatique (101) et le moyen de déplacement de la poutre sont adaptés pour déplacer rapidement les capteurs (15A) à courants de Foucault (15A) vers la position effacée (161) en cas de détection d'un défaut géométrique de la bande (1).

**16.** Installation de revêtement en continu d'une bande (1) en défilement, comprenant un dispositif de revêtement et une ligne d'évacuation et de traitement de la bande (1) après revêtement, **caractérisée en ce qu'**elle comprend un dispositif (9) selon la revendication 14 ou 15 disposé dans la ligne d'évacuation et de traitement de la bande (1).

**17.** Installation de revêtement en continu d'une bande (1) selon la revendication 16, l'installation étant une installation de revêtement au trempé d'une bande (1) métallique par un métal ou un alliage métallique tel qu'une installation de galvanisation au trempé en continu.

## Patentansprüche

**1.** Verfahren zum kontinuierlichen Messen der Dicke einer Beschichtungsmaterialschicht auf einem laufenden Band (1), nach dem mit Hilfe eines Wirbelstromsensors (15A) für mindestens einer Zone des Bandes (1) eine für die Dicke der Beschichtungsschicht repräsentative Größe gemessen wird und die Dicke der Beschichtungsschicht für diese Zone aus der gemessenen Größe und mindestens einem Kalibrierwert bestimmt wird, derart, dass die mit Hilfe des Wirbelstromsensors (15A) durchgeführte Messung die Messung der komplexen Impedanz einer Spule (51) gegenüberliegend zu dem laufenden Band (1) für eine tiefe Erregungsfrequenz und eine erhöhte Erregungsfrequenz und die Erstellung einer für die Dicke der Beschichtungsschicht repräsentativen Größe aus den Messungen der komplexen Impedanz umfasst, wobei die tiefe Erregungsfrequenz zwischen 40 kHz und 150 kHz und die erhöhte Erregungsfrequenz zwischen 400 kHz und 1000 kHz liegt.

**2.** Verfahren nach Anspruch 1, bei dem der mindestens eine Kalibrierwert dadurch bestimmt wird, dass eine Messung der Dicke der Schicht an mindestens einem Punkt der Zone durchgeführt wird, in der eine Messung mit Hilfe des Wirbelstromsensors (15A) durchgeführt wurde.

**3.** Verfahren nach Anspruch 1 oder 2, bei dem die Messung der Dicke mit Hilfe eines Schichtdickenmessgeräts (11) der Röntgenfluoreszenz durchgeführt wird.

**4.** Verfahren nach einem beliebigen der Ansprüche 1 bis 3, bei dem die mit Hilfe des Wirbelstromsensors (15A) durchgeführte Messung außerdem die Messung der komplexen Impedanz für eine tiefe Erregungsfrequenz und eine erhöhte Erregungsfrequenz einer Spule (52) gegenüberliegend zu einer Referenzprobe (55) umfasst und bei dem die für die Dicke der Beschichtungsschicht repräsentative Größe aus den Differenzen zwischen den komplexen Impedanzen der Spule (51) gegenüberliegend zum Band (1) und der Spule (52) gegenüberliegend zur Referenzprobe (55) bestimmt wird.

**5.** Verfahren nach einem beliebigen der Ansprüche 1 bis 4, bei dem das Band (1) aus Metall besteht.

**6.** Verfahren nach Anspruch 5, bei dem das Metallband (1) aus Stahl besteht und die Beschichtung eine Metallbeschichtung ist, die beispielsweise aus Zink oder einer Zinklegierung besteht.

7. Verfahren nach Anspruch 5 oder 6, bei dem vor der Durchführung der Messungen mit Hilfe der Wirbelstromsensoren (15A) das Band (1) entmagnetisiert wird.

8. Verfahren nach einem beliebigen der Ansprüche 1 bis 7, bei dem zur Durchführung der Messungen mit Hilfe der Wirbelstromsensoren (15A) eine Mehrzahl von Wirbelstromsensoren (15A) verwendet werden, die gemäß mindestens einer im Wesentlichen parallel zur Oberfläche des Bandes (1) liegenden Linie angeordnet sind, die sich quer in Bezug auf die Laufrichtung des Bandes (1) erstreckt, und die Sensoren 815) sequenziell aktiviert werden, um eine Reihe von Messungen zu erhalten, die über die Breite des Bandes (1) verteilt sind.

9. Verfahren nach Anspruch 8, bei dem eine Mehrzahl der genannten Messreihen, die über die Breite des Bandes (1) verteilt sind, durchgeführt wird, indem das Auslösen jeder der genannten Messreihen von einem Signal der Längsbewegung des Bandes (1) getaktet wird, wie beispielsweise einem von einem Impulsgenerator, der von einer Rolle in Kontakt mit dem Band (1) angetrieben wird, erzeugten Signal.

10. Verfahren nach Anspruch 8 oder 9, bei dem die Seitenposition des Bandes (1) in Bezug auf die mindestens eine Linie von Wirbelstromsensoren (15A) detektiert wird und bei dem die Position jeder Messzone in Bezug auf die Breite des Bandes (1) mit Hilfe der Seitenposition des Bandes (1) in Bezug auf die mindestens eine Linie von Wirbelstromsensoren (15) und der Position jedes Sensors (15A) in der Linie der Sonden bestimmt wird.

11. Verfahren nach Anspruch 10, bei dem ein Anfang des Bandes (1), wie die Schweißung zwischen zwei aufeinanderfolgenden Bändern, detektiert wird, dann kontinuierlich die Bewegung des Bandes (1) detektiert wird und für jede Messung die Länge des Bandes (1) gemessen wird, die den Messpunkt und den Anfang des Bandes (1) trennt, um die Positionen der Messzonen in Bezug auf die Länge des Bandes (1) zu bestimmen.

12. Verfahren nach Anspruch 11, bei dem die Positionen der Messzonen in Bezug auf die Länge und die Breite des Bandes (1) gespeichert wird, um eine Kartografie der Beschichtungsdicke auf dem Band (1) zu erstellen.

13. Verfahren nach Anspruch 12, bei dem das Band (1) eine Anlage der kontinuierlichen Beschichtung, wie eine Galvanisiertauchanlage, durchläuft und bei dem in Echtzeit mindestens ein Teil der Kartografie in der Steuerungskabine der Beschichtungsanlage mit Hilfe eines Visualisierungsmittels angezeigt wird und/oder mindestens ein Teil der Kartografie auf eine automatische Steuervorrichtung der Beschichtungsanlage in Echtzeit übertragen wird, damit die Steuervorrichtung einen Regelsollwert für die Beschichtungsanlage erstellt und/oder die Kartografie in einem Informationsmittel zum Zweck der Qualitätssteuerung gespeichert wird.

14. Vorrichtung (9) zur kontinuierlichen Messung der Dicke einer Beschichtungsmaterialschicht auf einem laufenden Band (1), umfassend:

- eine Mehrzahl von Wirbelstromsensoren (15A) des differentiellen und Bi-Frequenztyps, die in mindestens einer Linie an einem Trägerbalken (150) angeordnet sind, wobei jeder Sensor (15A) eine Spule (51) umfasst, die ausgebildet ist, gegenüberliegend zu dem Band (1) angeordnet zu sein,
- ein Dickenmessgerät (11) der Röntgenfluoreszenz,
- eine Steuervorrichtung (10B) für die Wirbelstromsensoren (15A), die mit mindestens einem Mittel zum Verfolgen des Vorschubs des Bandes (12, 16) verbunden ist,
- ein automatisches Steuerungsmittel (101), das insbesondere mit einem Mittel (17) zur Detektion der Seitenposition des Bandes (1) in Bezug auf die Mehrzahl der Wirbelstromsensoren (15A) und mit dem Dickenmessgerät (11) der Röntgenfluoreszenz verbunden ist, und
- ein Informationsmittel (100) zur Regelung und Verwaltung der Messungen, das mit der Vorrichtung zur Steuerung der Sensoren (15A) und mit dem automatischen Steuerungsmittel (101) verbunden ist, um ein Verfahren nach einem der vorhergehenden Ansprüche durchzuführen,

wobei die Vorrichtung (9) ausgebildet ist, die komplexe Impedanz der Spule (51) für eine niedrige Erregungsfrequenz und eine erhöhte Erregungsfrequenz zu messen und eine für die Dicke der Beschichtungsschicht repräsentative Größe aus den Messungen der komplexen Impedanz zu erstellen, wobei die tiefe Erregungsfrequenz zwischen 40 kHz und 150 kHz liegt und die erhöhte Erregungsfrequenz zwischen 400 kHz und 1000 kHz liegt.

15. Vorrichtung (9) nach Anspruch 14, bei der der Trägerbalken (150) der Wirbelstromsensoren zwischen einer Betriebsposition (160) und einer zurückgezogenen Position (161) montiert ist und bei der die Vorrichtung ein Mittel zum Verschieben des Balkens zwischen der Betriebsposition und der zurückgezogenen Position umfasst, das von dem automatischen Steuerungsmittel (101) gesteuert wird, das gleichfalls mit einem Mittel (13) zur Detektion eines geometrischen Fehlers des Bandes (1) verbunden ist, und bei der das automatische Steuerungsmittel (101) und das Mittel zum Verschieben des Balkens ausgebildet sind, um im Fall der Detektion eines geometrischen Fehlers des Bandes (1) schnell die Wirbelstromsensoren (15A) in die zurückgezogene Position (161) zu bewegen.

16. Anlage zur kontinuierlichen Beschichtung eines laufenden Bandes (1), umfassend eine Vorrichtung zum Beschichten und eine Linie zum Austragen und zum Behandeln des Bandes (1) nach der Beschichtung, **dadurch gekennzeichnet, dass** sie eine Vorrichtung (9) nach Anspruch 14 oder 15 umfasst, die in der Linie zum Austrag und zum Behandeln des Bandes (1) angeordnet ist.

17. Anlage zur kontinuierlichen Beschichtung eines laufenden Bandes (1) nach Anspruch 16, wobei die Anlage eine Tauchbeschichtungsanlage eines Metallbandes (1) mit einem Metall oder einer Metalllegierung ist, wie eine Tauchgalvanisieranlage oder besser, wie eine kontinuierliche Tauchgalvanisieranlage.

## Claims

1. A method for continuously measuring the thickness of a coating material layer on a running strip (1) according to which, by means of a sensor (15A) with eddy currents, for at least one area of the strip (1), a quantity is measured, representative of the thickness of the coating layer and the thickness of the coating layer is determined for this area from the quantity measured and from at least one calibration value, wherein the measurement conducted with the eddy current sensor (15A) comprises the measurement of the complex impedance of a coil (51) facing the running strip (1) for a low excitation frequency and a high excitation frequency and the elaboration of a quantity representative of the thickness of the coating layer from said complex impedance measurements, wherein the low excitation frequency is comprised between 40 kHz and 150 kHz and wherein the high excitation frequency is comprised between 400 kHz and 1000 kHz.

2. The method according to claim 1, wherein at least one calibration value is determined by carrying out a measurement of the thickness of said layer in at least one point of the area in which a measurement with an eddy current sensor is carried out.

3. The method according to claim 1 or 2, wherein said thickness measurement is conducted with an X fluorescence thickness gauge (11).

4. The method according to any of claims 1 to 3, wherein the measurement made with an eddy current sensor further comprises the measurement of the complex impedance, for a low excitation frequency and a high excitation frequency, of a coil (52) facing a reference sample (55) and wherein the quantity representative of the thickness of the coating layer, is determined from differences between the complex impedances of the coil facing the strip and of the coil facing the reference sample.

5. The method according to any of claims 1 to 4, wherein the strip is metallic.

6. The method according to claim 5, wherein the metal strip (1) is in steel and the coating is a metal coating for example consisting of zinc or zinc alloy.

7. The method according to claim 5 or 6, wherein before carrying out measurements with eddy current sensors (15A), the strip (1) is demagnetized.

8. The method according to any of claims 1 to 7, wherein in order to carry out the measurements with eddy current sensors, a plurality of eddy current sensors arranged along at least one line substantially parallel to the surface of the strip is used, extending transversely relatively to the running direction of the strip and the sensors are sequentially excited so as to obtain a series of measurements distributed over the width of the strip.

9. The method according to claim 8, wherein a plurality of said series of measurements distributed over the width of the strip is carried out by timing the triggering of each of said series of measurements from a longitudinal displacement signal of the strip such as for example a signal generated by a pulse generator driven by a roll in contact with the strip.

10. The method according to claim 8 or 9, wherein the lateral position of the strip relatively to said at least one line of eddy current sensors (15A) is detected and wherein the position of each measurement area is determined relatively to the thickness of the strip by means of the lateral position of the strip relatively to said at least one line of eddy current sensors (15A) and of the position of each sensor (15A) in the line of probes.

11. The method according to claim 10, wherein a strip beginning is detected such as the weld between two successive strips, and then the displacement of the strip is continuously detected and for each measurement the length of strip separating the measurement point and the strip beginning is determined, in order to determine the position of the measurement areas relatively to the length of the strip.

12. The method according to claim 11, wherein the position of the measurement areas relatively to the length and to the width of the strip are recorded for elaborating a mapping of the coating thickness over the strip.

13. The method according to claim 12, wherein the strip runs in a continuous coating installation, such as hot-dip galvanization installation and wherein at least one portion of the mapping is displayed in real time in a control cabin of the coating installation with a viewing means and/or at least one portion of the mapping is transmitted in real time to an automatic control device of the coating installation so that the control device elaborates a set regulation value for the coating installation and/or the mapping is recorded in a computer means for quality control purposes.

14. A device (9) for continuously measuring the thickness of a coating layer on a running strip (1), comprising :

- a plurality of eddy current sensors (15A) of the differential and two-frequency type arranged in at least one line on a supporting beam (150), each sensor (15A) comprising a coil (51) configured for facing the running strip (1),
- an X fluorescence thickness gauge (11),
- a device (15B) for controlling the eddy current sensors (15A) connected to at least one means for following the progression of the strip (12, 16),
- an automatic control means (101) notably connected to a means (17) for detecting the lateral position of the strip (1) relatively to the plurality of eddy current sensors (15A) and to the X fluorescence thickness gauge (11), and
- a computer means (100) for controlling and managing the measurements connected to the device for controlling the sensors (15A) and to the automatic control means (101) in order to implement a process according to any of the preceding claims,

the device (9) being configured for measuring the complex impedance of the coil (51) for a low excitation frequency and a high excitation frequency and for elaborating a quantity representative of the thickness of the coating layer from said complex impedance measurements, the low excitation frequency being comprised between 40 kHz and 150 kHz and the high excitation frequency being comprised between 400 kHz and 1000 kHz.

15. The device according to claim 14, wherein the supporting beam (150) for the eddy current sensors (15A) is moveably mounted between a service position (160) and a retracted position (161) and in that the device comprises a means for displacing the beam between the service position and the retracted position by said automatic control means (101) which is also connected to a means (13) for detecting a geometrical defect of the strip (1) and wherein the automatic control means (101) and the means for displacing the beam are adapted so as to rapidly displace the eddy current sensors (15A) towards the retracted position (161) in the case of detection of a geometrical defect of the strip.

16. An installation for continuously coating a running strip of the type comprising a coating device and a line for discharging and treating the strip (1) after coating, wherein it comprises a device (9) according to claims 14 or 15 arranged in the discharging and treatment line for the strip.

17. The installation for continuously coating a strip (1) according to claim 16, the installation being an installation for hot-dip coating of a metal strip with a metal or metal alloy such as a continuous hot-dip galvanization installation.

## FIG.1

## FIG.2

$X_{l,L}$

$P1$ $P2$ $P3$ $P4$

$l$

$1$ $1A$

$L$

$X1$ $X2$ $X3$ $X4$

$F_{l,L}$

$l$

$1A$

$L$

$P1$ $P2$ $P3$ $P4$

$X1$

$1A$

$F1$ $F2$ $F3$ $F4$

$X2$ $X3$ $X4$

# FIG.3

FIG.4

FIG.5

**FIG.6**

## FIG.7

FIG.8

**EP 2 577 226 B1**

## RÉFÉRENCES CITÉES DANS LA DESCRIPTION

**Documents brevets cités dans la description**

- US 2003067298 A1
- US 5394085 A
- US 2009112509 A1
- AU 8700082 B2
- US 5800615 A
- US 6366083 B1